# EUROPEAN PATENT SPECIFICATION

(11) **EP 3 002 740 B1**
(45) Date of publication and mention of the grant of the patent: **06.03.2019**
(21) Application number: 14187624.3
(22) Date of filing: 03.10.2014
(51) Int. Cl.: G08B 21/06

(54) **Method and system for avoiding an in-alert driver of a vehicle**
Verfahren und System zur Vermeidung eines unaufmerksamen Fahrers eines Fahrzeugs
Procédé et système pour éviter un manque de vigilance d'un conducteur d'un véhicule

(43) Date of publication of application: 06.04.2016
(73) Proprietor: Volvo Car Corporation, 40531 Göteborg (SE)
(72) Inventor: Davidsson, Staffan, 42668 Västra Frölunda (SE); Maresch, Johan, 41125 GÖTEBORG (SE)
(74) Representative: Valea AB

(56) References cited:
- DE-C1- 19 803 158
- GB-A- 2 329 057
- US-A- 5 402 108
- US-A1- 2008 291 032

## Description

### TECHNICAL FIELD

The present disclosure relates to an alertness-increasing system and a method performed therein for avoiding a situation with a potentially in-alert driver of a vehicle.

### BACKGROUND

Because of a need or desire to reach a given destination at a given time, it is not uncommon that vehicle drivers spend more time at the wheel than is reasonably prudent and safe, or spend time driving fatigued long past when they should be asleep. Accordingly, it is not surprising that vehicle accidents occur where the driver has dozed off at the wheel and where the vehicle has veered off the road. Accidents result not only in vehicle damage, property damage and severe injury of the driver; they can also result in the injury of other drivers or pedestrians in the area of the accident.

In order to avoid the foregoing, solutions have been developed that calculate a level of driver drowsiness or in-alertness. This level of drowsiness or in-alertness may then be utilized to inform the driver that he or she needs to take action, such as take a rest, to maintain his or her performance.

Conventional approaches to determine if the driver is drowsy may include detecting bodily signs from the driver. For instance, eye and head movements may be associated with drowsiness, and some solutions revolve around devices that utilize this information. Moreover, it is known that as a driver fatigues, his or her grip on the steering wheel relaxes. Accordingly, solutions have been developed involving a sleep alarm mounted on the steering wheel, which measures the driver's grip.

When a drowsy driver is detected, alarms, such as warning lights and/or warning buzzers, are commonly used to alert the driver. Such alarms may however often be ignored, and/or the warnings may be perceived as intrusive, giving the driver an inconvenient feeling.

US 7,138,922, for instance, relates to a drowsy driver monitoring and prevention system. This document discloses how the drowsy driver monitoring and prevention system is coupled to a service center. When it is determined that a vehicle operator is drowsy, a communication signal is communicated to the service center. The service center then generates a response signal to the vehicle operator to alert the driver and direct the driver to a rest area.

However, although US 7,138,922 provides a system which goes beyond warning lights and buzzers, the suggested approach implicates a rather complex solution in that it involves a third party, i.e. the service center.

The document US 2008 291032 describes an anti-drowsiness method and system for drivers that provides cognitive stimulus such as a game if conditions are boring.

### SUMMARY OF THE INVENTION

It is therefore an object of embodiments herein to provide an approach for avoiding, in an efficient manner, a situation with a potentially in-alert driver of a vehicle.

The invention is defined by the appended claims.

According to a first aspect of embodiments herein, the object is achieved by a method performed by an alertness-increasing system for avoiding a situation with a potentially in-alert driver of a vehicle. The alertness-increasing system determines that the driver is, and/or may potentially become, in-alert in his or her driving. Moreover, the alertness-increasing system initiates a software-based function adapted to cognitively stimulate the driver.

Thereby, by the alertness-increasing system initiating, upon establishing that the driver is and/or may potentially become in-alert, a software-based function adapted to cognitively stimulate the driver, a mind-stimulating activity is triggered to increase, or maintain, the alertness of the driver. That is, by stimulating the mind of the driver, i.e. by engaging the driver in intellectual thinking or interaction, the alertness of the driver may be increased and/or maintained. Thus, a decrement or a potential decrement in driver performance, may be counteracted through mind-stimulation of the driver, i.e. by stimulating the driver in such a way that he or she is not distracted from driving the vehicle in a safe manner.

An advantage with embodiments herein may be that by initiating a software-based function adapted to cognitively stimulate the driver, the driver may be roused from his or her in-alertness, and/or may maintain his or her alertness, in a manner which may not even be perceived by the driver as an activity triggered to avoid a situation of him or her potentially being in-alert.

Yet another advantage with embodiments herein may be that by initiating said function rather than merely triggering a warning, which may be ignored or be perceived as intrusive or distracting by the driver, the driver is invited to participate in a mind-stimulating activity, which is likely to be a welcomed stimulus. Accordingly, triggering the mind-stimulating activity represents a sophisticated solution to avoiding a situation of the driver potentially being in-alert, as compared to merely alerting the driver by means of e.g. a warning.

For that reason, there is provided an approach for avoiding, in an efficient manner, a situation with a potentially in-alert driver of a vehicle.

The technical features and corresponding advantages of the above mentioned method will be discussed in further detail in the following.

By introducing a method performed by an alertness-increasing system for avoiding a situation with a potentially in-alert driver of a vehicle, an approach is provided which supports avoidance of potentially hazardous driving. The word "vehicle" may refer to any arbitrary vehicle, and may for instance refer to an engine-propelled vehicle, such as car, truck, lorry, van, bus, motor cycle, scooter, tractor, military vehicle, air plane, vessel, boat etc., or a rail-bound vehicle, such as e.g. a train or tram. Moreover, the expression "potentially in-alert driver" may refer to the driver being known, or being assumed to be or become, bored, drowsy, dosing, fatigued, sleepy, and/or asleep.

Since the alertness-increasing system determines that the driver is, and/or may potentially become, in-alert in his or her driving, it is established that the driver is e.g. bored, drowsy, dosing, fatigued, sleepy, and/or asleep, or that the driver is likely to so become. "Determining" may for instance likewise include "establishing", and/or "learning of", and determining that the driver is and/or may potentially become in-alert, may be based on a level of measured in-alertness of the driver being higher than a predetermined set value. Determination that the driver is in-alert may be based on conventional approaches of calculating a level of drowsiness or in-alertness. That is, it may for instance be determined that the driver is in-alert, by monitoring bodily signs from the driver, as commonly known in the art.

Moreover, determination that the driver may potentially become in-alert, may be based on the awareness of a monotonous road section lying ahead or being assumed to lie ahead of the vehicle, in which case it may be likely that the driver becomes e.g. drowsy. That is, it may for instance be determined that the driver may potentially become in-alert, by monitoring the scene ahead of the vehicle, e.g. by means of a camera mounted on the vehicle, as commonly known in the art.

Additionally, or alternatively, information such as the following may be taken into consideration to calculate a level of drowsiness or in-alertness of a driver and/or to determine how often the level of drowsiness or in-alertness of a driver should be determined: how long a driver has been driving and/or the time of day, and/or the temperature and/or ventilation level inside the vehicle, and/or how many hours of sleep or rest a driver is assumed to have had based on a length of a period of time during which a vehicle, user device, or a nomadic device was not used,

Since the monitoring described above, or similar solutions for detecting signs of in-alertness or potential in-alertness of the driver, may already be implemented in the vehicle, the monitoring data may thus be obtainable by the alertness-increasing system, for instance via messages or signals. Determining that the driver is or may potentially become in-alert, may accordingly refer to fetching, receiving and/or acquiring in-alertness data from co-systems and/or nodes in the vehicle, which co-systems and/or nodes monitor driver in-alertness behaviour or monotonous road sections, and/or hold such information. Moreover, determining that the driver is or may potentially become in-alert, may take place periodically, essentially constantly and/or on request.

Since the alertness-increasing system initiates a software-based function adapted to cognitively stimulate the driver, a mind-stimulating activity is triggered to increase, or preventively maintain, the alertness of the driver. That is, by stimulating the mind of the driver, and/or engaging the driver in intellectual thinking or interaction, the alertness of the driver may be increased. Thus, a decrement or a potential decrement in driver performance, may be counteracted through mind-stimulation of the driver. Accordingly, by initiating a software-based function adapted to cognitively stimulate the driver, the driver may be roused from his or her in-alertness, and/or may maintain his or her alertness, in a manner which may not even be perceived by the driver as an activity triggered to avoid a situation of him or her potentially being in-alert. By initiating said function rather than merely triggering a warning, which may be ignored or be perceived as intrusive by the driver, the driver is invited to participate in a mind-stimulating activity, which is likely to be welcomed stimuli. Accordingly, triggering the mind-stimulating activity represents a sophisticated solution to avoiding a situation of the driver potentially being in-alert, as compared to merely alerting the driver by means of e.g. an audible warning, such as a warning signal and/or message, a visual warning, such as a displayed graphic warning and/or message, and/or a tactile warning, such as a vibration of the steering wheel and/or driver seat.

The expression "software-based function" may refer to an embedded function, functionality and/or an application. Moreover, the word "initiating" may refer to, for instance, "triggering", "starting", "making available", "providing", and/or "providing access to". The expression of the software-based function being "adapted to cognitively stimulate the driver" may refer to the software-based function being mind-stimulating for the driver, and/or the software-based function engaging the driver in intellectual thinking or interaction. Furthermore, said function may refer to a function which is mind-stimulating on a level at which the alertness of the driver is increased, or preventively maintained, rather than a function distracting the driver from his or her main task of driving the vehicle.

Furthermore, the software-based function adapted to cognitively stimulate the driver, may refer to a function which provides audible cognitive stimulation e.g. via one or more of a loudspeaker; for instance **audible** presentation of an audiobook, a riddle, information associated with the current region through which the vehicle is traveling, or a user manual of the vehicle, etc. Additionally or alternatively, the software-based function adapted to cognitively stimulate the driver, may refer to a function which provides **visual** cognitive stimulation e.g. via one or more of a display; for instance visual presentation of a riddle or information associated with the current region through which the vehicle is traveling, etc.

Moreover, the software-based function adapted to cognitively stimulate the driver may refer to a function which invites or prompts the driver to interact therewith, for instance via one or more of a touch display, a microphone, and/or steering wheel control buttons. Said function may accordingly be represented by, for instance, a tutorial associated with use of the vehicle or an electronic device in communication with the vehicle.

Furthermore, the alertness-increasing system may optionally be adapted to be in radio communication with a radio communications network, such as cellular communications network, e.g. LTE, EDGE, CDMA, 4G, 3G, GPRS, or GSM, e.g. via the vehicle and/or via a user device, for instance a smartphone, adapted to be in communication with the vehicle. Thereby, the software-based function may be represented by a function which may utilize on-line functionality, or which for instance may be adapted to suit the current vehicle position.

According to an embodiment, the function may be associated with an in-vehicle system of the vehicle. Thereby, the in-vehicle system may, to some extent, be involved in the provision of said function. That is, at least a portion of the software-based function may reside in, be available through, be provided by, presented by means of, and/or be interactable via, the in-vehicle system.

The "in-vehicle system", which may also be referred to as a built-in vehicle system, native in-vehicle control system or vehicle infotainment system, may refer to hardware/software products and systems which are permanently or temporarily built into, or can be added to the vehicle, in order to enhance the vehicle occupant experience when it comes to providing audio and visual entertainment, as well as automotive navigation systems. Accordingly, the in-vehicle system may comprise resources adapted for functionality control of the in-vehicle system, such as microphones, speakers, input/control devices such as physical push buttons, rocker buttons, dials, slider switches, sticks, and/or a touchpad. The in-vehicle system may further comprise one or several displays, such as touch sensitive displays, commonly utilized to display e.g. graphic, video, digital images, animations and text, and further utilized to display e.g. virtual buttons, menus, and other user-interface objects to thereby provide a user interface through which a vehicle occupant, for instance the driver, may interact with the in-vehicle system.

Accordingly, the resources of the in-vehicle system, such as the microphone(s), loudspeaker(s), input/control devices and/or display(s), may be utilized to provide the software-based function, and/or utilized to enable the driver to interact with the software-based function.

Additionally or alternatively, according to an embodiment, the function may be associated with a user device adapted to communicate with the vehicle. Thereby, the user device may, to some extent, be involved in the provision of said function. That is, at least a portion of the software-based function may reside in, be available through, be provided by, presented by means of, and/or be interactable via, the user device. Thereby, functionality providing at least part of the inventive concept may be provided by means of the user device, as a complement to, or instead of, being provided by means of e.g. an in-vehicle system. The expression of the "user device being adapted to communicate with the vehicle" may refer to the user device being configured to be in communication with the vehicle, e.g. the in-vehicle system thereof, such that information and/or data may be transferred between the vehicle and the user device. Such communication may for instance be accomplished physically, such as via USB connection, and/or wirelessly, such as via Bluetooth, WiFi, or the like.

The expression "user device" may refer to a portable electronic device, and may include an information, communication as well as entertainment device that can be brought into the vehicle by the vehicle occupant, e.g. the driver, with the intention to be used e.g. while driving. The "user device" may hence refer to, for instance, a multi-functional smart phone, mobile phone, mobile terminal or wireless terminal, portable computer such as a laptop, PDA or tablet computer, surf plate such as an iPad, Pocket PC, mobile navigation device, iPod, and/or DVD player. The "user device" may comprise resources adapted for functionality control thereof, such as microphone(s), speaker(s), input/control devices such as physical push buttons, rocker buttons, dials, slider switches, sticks, and/or a touchpad. The user device may further comprise one or several displays, such as touch sensitive displays, commonly utilized to display e.g. graphic, video, digital images, animations and text, and further utilized to display e.g. virtual buttons, menus, and other user-interface objects to thereby provide a user interface through which a vehicle occupant, for instance the driver, may interact with the user device.

Accordingly, the resources of the user device, such as the microphone(s), loudspeaker(s), input/control devices and/or display(s), may be utilized to provide the software-based function, and/or utilized to enable the driver to interact with the software-based function.

The expression of the user device being adapted to "communicate" with the vehicle, may refer to the user device being adapted to "be paired" and/or adapted to "be in connection" with the vehicle. The "user device" may accordingly be represented by a "nomadic device", i.e. a user device being paired, or adapted to be paired, with the vehicle. Such a connection may for instance be accomplished physically, such as via USB connection, and/or wirelessly, such as via Bluetooth, WiFi, or the like. Possibly, in order to be paired, identification of the nomadic device may be necessary, and/or authentication of the vehicle occupant, e.g. the driver. While the nomadic device is paired, the e.g. driver may utilize functionality of the nomadic device via the in-vehicle system. Commonly, the nomadic device may include various user application programs, e.g. either integrated into an operating system of the nomadic device, and/or stored in a memory thereof and executable by a processor thereof. Thus, user application programs may be hosted and run on the nomadic device while the e.g. driver may interact with one or several of the user application programs through the in-vehicle system. Moreover, while the nomadic device is paired, the resources of the in-vehicle system may be utilized, such as e.g. microphones, speakers, displays and/or in-vehicle buttons for interacting with a selected user application program running on the nomadic device.

Accordingly, in the scenario of at least a portion of the software-based function being comprised in the nomadic device, the resources of the in-vehicle system, such as the microphone(s), loudspeaker(s), input/control devices and or display(s) of the in-vehicle system, **and/or** the resources of the nomadic device, such as the microphone(s), loudspeaker(s), input/control devices and or display(s) of the nomadic device, may be utilized to provide the software-based function, and/or utilized to enable the driver to interact with the software-based function.

The disposition of the function, and the ability to interact therewith, between the in-vehicle system and the user device, e.g. a nomadic device, may depend on the character and/or functionality of the function, the in-vehicle system and/or the user device. That is, the software-based function may be embedded in one or more of an arbitrary node comprised in the vehicle, such as an electronic control unit (ECU), and/or embedded in the user device adapted to be in communication with the vehicle. The disposition of the functionality between the vehicle and optional portable device may be arbitrary selected as suitable for the situation at hand. According to an example, the software-based function is comprised in the alertness-increasing system. According to another example, at least a portion of the software-based function is provided by means of a plug-in solution, for instance by being provided on a dongle. In that manner, an aftermarket solution may be supported.

According to another embodiment, the function may be considered to be driver-distracting and prohibited from use during absence of the previously discussed determination of the driver being, and/or potentially becoming, in-alert in his or her driving. Thereby, upon determining that the driver is and/or may potentially become in-alert, a function deemed to be too driver-distracting during ordinary conditions, i.e. when it has **not** been determined that the driver is, and/or may potentially become, in-alert, may go from being blocked from use to be made available in order to avoid a situation with a potentially in-alert driver. That is, the function according to this embodiment is a function deemed to be driver-distracting and un-available to the driver when it has **not** been determined that the driver is, and/or may potentially become, in-alert. However, upon determining that the driver is and/or may potentially become in-alert, the same function may be deemed to be driver-stimulating rather than driver-distracting, in that it enables for avoiding a situation with a potentially in-alert driver. The word "driver-distracting" may likewise refer to "interfering with the driver's focus on driving the vehicle", whereas "prohibited" likewise may refer to "blocked" and/or "unavailable".

Said driver-distracting function may for instance refer to in-vehicle functionality which is blocked from use when it has not been determined that the driver is, and/or may potentially become, in-alert; for instance, certain infotainment, entertainment and/or navigation features. For instance, the driver-distracting function may relate to texting, placing a phone call, scrolling through menus, entering input into the navigation system etc., all of which during "ordinary" conditions may be unavailable functionality to the driver, for instance when driving the vehicle at a speed of more than e.g. 10 km/h.

According to yet another embodiment, the function may comprise an alertness task application, such as an alertness game application. Thereby, by the software-based function comprising an alertness task application, said function is cognitively stimulating to the driver in that the alertness task application invites the driver to participate in an alertness task. The alertness task application may relate to any task or game cognitively stimulating the driver, such as, for instance, a task or game inviting the driver to do mental arithmetic, do riddles, sing, take a quiz, or count the number of oncoming vehicles having licence plates containing a specific letter or number, or a task or game questioning the driver on previously passed surroundings, etc. The alertness task application, e.g. an alertness game application, may for instance be represented by a user application program provided in the alertness-increasing system, in-vehicle system, and/or user device adapted to communicate with the vehicle.

According to a further embodiment, the alertness-increasing system may determine that the driver is and/or may potentially become in-alert in his or her driving, based on a reached score in the alertness task application discussed above falling below a predetermined minimum score threshold. Thereby, in-alertness or potential in-alertness may be established by taking into account how the driver performs in said alertness task application. That is, a reached score, or alternatively a plurality of reached scores, dropping below one or more score thresholds, may indicate that the driver is e.g. drowsy. Furthermore, declining scores of a number of driver participations in the alertness task application, may indicate that the driver's alertness is decreasing. Accordingly, keeping track of the driver's performance when participating in the alertness task application may assist in establishing that the driver is, and/or may potentially become, in-alert. The expression "predetermined minimum score threshold" may refer to a pre-set, or adjustable, lowest acceptable result level, at which a score falling below the set level is assumed to indicate the driver being in-alert. Furthermore, "based on" may in this context be interpreted to likewise include at least "utilizing", "considering" and "taking into account".

A measure when falling below the predetermined minimum score threshold, may be to initiate another, and/or a complimentary, software-based function adapted to cognitively stimulate the driver, for instance a function that is more challenging, and/or a function different from the original one. Ultimately, the driver may need to be warned as commonly known in the art.

According to one embodiment, the alertness-increasing system may determine status data, which status data comprises one or more status data parameters reflecting current in-alertness conditions. Moreover, the alertness-increasing system may determine that the status data insinuates that the driver is and/or may potentially become in-alert in his or her driving, based on comparing at least a first status data parameter of the status data, with predetermined in-alertness criteria. Thereby, the alertness-increasing system establishes a current driver-alertness status pertinent a prevailing situation. Furthermore, since the alertness-increasing system establishes whether the driver is considered to be and/or potentially become in-alert, by comparing at least a first status data parameter of the status data, e.g. a parameter reflecting a current driver grip force on the steering wheel, with predetermined in-alertness criteria, e.g. a steering wheel grip force threshold preference, the alertness-increasing system may determine that if the current driver grip force is below the steering wheel grip force threshold, the driver is considered currently in-alert in his or her driving.

The expression "status data parameters reflecting current in-alertness conditions" may refer to status data elements revealing, indicating and/or comprising prevailing status values of parameters associated with alertness of the driver. "Current in-alertness conditions" is in this context intended to be interpreted as "essentially current in-alertness conditions", thus likewise including e.g. "recently prevailing in-alertness conditions". The expression of the alertness-increasing system "determining" status data may refer to the alertness-increasing system "establishing", "learning of", "receiving", "retrieving", "reading" and/or "fetching" status data. For instance, the one or more status data parameters may already be known by concurrent systems of the vehicle, and may thus be available to the alertness-increasing system. The word "insinuates" may refer to for instance "indicates" and/or "reveals", whereas "based on", as previously indicated, may be interpreted to likewise include at least "utilizing", "considering" and "taking into account". Furthermore, the expression "predetermined in-alertness criteria", which criteria may be pre-set and/or adjustable, may refer to maximum parameters levels of in-alertness considered suitable.

It should be appreciated that the introduced methods in the alertness-increasing system may require the vehicle and/or the user device to be in a respective "ON" state.

According to a second aspect of embodiments herein, the object is achieved by an alertness-increasing system adapted for avoiding a situation with a potentially in-alert driver of a vehicle. The alertness-increasing system comprises a determining unit adapted for determining that the driver is, and/or may potentially become, in-alert in his or her driving. The alertness-increasing system further comprises an initiating unit adapted for initiating a software-based function adapted to cognitively stimulate the driver.

According to an embodiment, the function may be associated with an in-vehicle system of the vehicle. Additionally or alternatively, the function may be associated with a user device adapted to communicate with the vehicle.

According to another embodiment, the function may be considered to be driver-distracting and prohibited from use during absence of the previously discussed determination that the driver is, and/or may potentially become, in-alert in his or her driving.

According to yet another embodiment, the function may comprise an alertness task application, such as an alertness game application.

According to a further embodiment, the determining unit may be adapted for determining that the driver is, and/or may potentially become, in-alert in his or her driving, based on a reached score in the alertness task application falling below a predetermined minimum score threshold.

According to one embodiment, the determining unit may be adapted for determining status data, which status data comprises one or more status data parameters reflecting current in-alertness conditions. Moreover, the determining unit may be adapted for determining that the status data insinuates that the driver is, and/or may potentially become, in-alert in his or her driving, based on comparing at least a first status data parameter of the status data, with predetermined in-alertness criteria.

Similar advantages as those mentioned in the foregoing in relation to the first aspect correspondingly apply to the second aspect, why these advantages are not further discussed.

According to a third aspect of embodiments herein, the object is achieved by a vehicle comprising at least a portion of the alertness-increasing system discussed above.

According to an embodiment, the vehicle may further comprise at least a portion of the previously discussed function adapted to cognitively stimulate the driver.

Again, similar advantages as those mentioned in the foregoing in relation to the first aspect correspondingly apply to the third aspect, why these advantages are not further discussed.

According to a fourth aspect of embodiments herein, the object is achieved by a user device adapted to communicate with the vehicle discussed in relation to the third aspect. The user device comprises at least a portion of the alertness-increasing system discussed above and/or at least a portion of the function discussed above adapted to cognitively stimulate the driver. Once more, similar advantages as those mentioned in the foregoing in relation to the first aspect correspondingly apply to the fourth aspect, why these advantages are not further discussed.

According to a fifth aspect of embodiments herein, the object is achieved by a computer program product comprising a computer program containing computer program code means arranged to cause a computer or a processor to execute the steps of the method of the alertness-increasing system discussed above, stored on a computer-readable medium or a carrier wave. Yet again, similar advantages as those mentioned in the foregoing in relation to the first aspect correspondingly apply to the fifth aspect, why these advantages are not further discussed.

### BRIEF DESCRIPTION OF THE DRAWINGS

The various aspects of the non-limiting embodiments of the invention, including particular features and advantages, will be readily understood from the following detailed description and the accompanying drawings, in which:
**Figure 1** illustrates a schematic overview of an exemplifying alertness-increasing system comprised in a vehicle and/or a user device, according to embodiments of the disclosure;
**Figure 2** is a schematic block diagram illustrating an exemplifying alertness-increasing system according to embodiments of the disclosure; and
**Figure 3** is a flowchart depicting an exemplifying method performed by an alertness-increasing system according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to avoiding a situation with a potentially in-alert driver of a vehicle, there will be disclosed that by stimulating the mind of the driver, such as engaging the driver in intellectual thinking or interaction, the alertness of the driver may be increased.

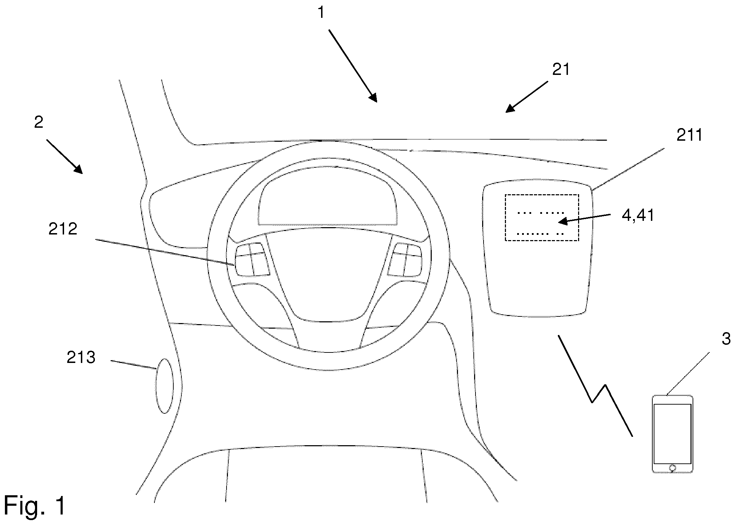

Referring now to the figures and **Figure 1** in particular, there is depicted a schematic overview of an exemplifying **alertness-increasing system 1** comprised in a **vehicle 2** and/or comprised in a **user device 3,** according to embodiments of the disclosure. The alertness-increasing system 1, which will be described in further detail below, is adapted for avoiding a situation with a potentially in-alert driver of the vehicle 2. The illustrated vehicle 2 is in the shown embodiment a car, whereas the illustrated user device 3 is a mobile user device, namely a smart phone. The user device 3 is adapted to communicate with the vehicle 2, such that information and/or data may be transferred between the vehicle 2 and the user device 3. Such communication may for instance be accomplished physically, such as via USB connection, and/or wirelessly, such as via Bluetooth, WiFi, or the like. Here, the user device 3 is paired with the vehicle 2, thus considered to be a nomadic device.

The exemplifying alertness-increasing system 1 of Figure 1 is at least partly comprised in the vehicle 2, for instance in an **in-vehicle system 21** thereof such as an infotainment system. Additionally or alternatively, the alertness-increasing system 1 may at least partly be comprised in the user device 3.

Moreover, a **software-based function 4** adapted to cognitively stimulate the driver, is at least partly comprised in the vehicle 2, for instance in said in-vehicle system 21. The software-based function 4 is here associated with the in-vehicle system 21. Thereby, the in-vehicle system 21 is, to some extent, involved in the provision of said function 4. That is, at least a portion of the software-based function 4 may reside in, be available through, be provided by, presented by means of, and/or be interactable via, the in-vehicle system 21. Accordingly, resources of the in-vehicle system 21 may be utilized to provide the software-based function 4, and/or utilized to enable the driver to interact with the software-based function 4.

Additionally or alternatively, the software-based function 4 adapted to cognitively stimulate the driver, may at least partly be comprised in the user device 3. The software-based function 4 may be associated with the user device 3. Thereby, the user device 3 may, to some extent, be involved in the provision of said function 4. That is, at least a portion of the software-based function 4 may reside in, be available through, be provided by, presented by means of, and/or be interactable via, the user device 3. Thereby, functionality providing at least part of the inventive concept may be provided by means of the user device 3, as a complement to, or instead of, being provided by means of e.g. the in-vehicle system 21.
Moreover, while the user device 3 is paired with the vehicle 2, the resources of the in-vehicle system 21 may be utilized for interacting with e.g. a user application program running on the nomadic device 3. Accordingly, in the scenario of at least a portion of the software-based function 4 being comprised in the nomadic device 3, the resources of the in-vehicle system 21 **and/or** the resources of the nomadic device 3, may be utilized to provide the software-based function 4, and/or utilized to enable the driver to interact with the software-based function 4.

The in-vehicle system 21 of the shown exemplifying embodiment comprises resources such as one or more of an arbitrarily arranged **display 211;** here a touch display arranged in the instrument panel of the vehicle 2. Moreover, the in-vehicle system 21 of the shown exemplifying embodiment comprises one or more of arbitrarily arranged optional **steering wheel control buttons 212, loud speakers 213** and/or microphones (not shown). The display 211, the steering wheel control buttons 212, the loud speakers 213 and/or the one or more microphones may hence be utilized for realization of the software-based function 4, and/or utilized for interaction by the driver with the software-based function 4.

The exemplifying software-based function 4 of the embodiment of Figure 1 comprises an **alertness task application 41.** The alertness task application 41 is here an alertness game application program adapted to run on the user device 3, namely an exemplifying memory game application program adapted to engage the driver in a mind-stimulating activity. Furthermore, the software-based function 4 may be considered to be driver-distracting and prohibited from use, e.g. by the driver, during circumstances when it is assumed or known that the driver is not, and/or potentially not about to become, in-alert in his or her driving.

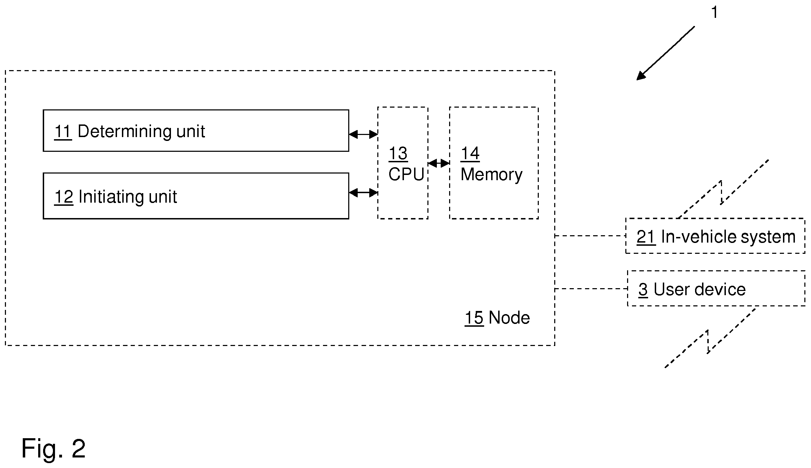

As further shown in **Figure 2****,** which depicts a schematic block diagram illustrating an exemplifying alertness-increasing system 1 according to embodiments of the disclosure, the alertness-increasing system 1 is, as previously mentioned, adapted for avoiding a situation with a potentially in-alert driver of the vehicle 2.

The alertness-increasing system 1 comprises a **determining unit 11** and an **initiating unit 12.** Furthermore, the embodiments herein for avoiding a situation with a potentially in-alert driver of the vehicle 2, may be implemented through one or more processors, such as a **processor 13,** here denoted CPU, together with computer program code for performing the functions and actions of the embodiments herein. Said program code may also be provided as a computer program product, for instance in the form of a data carrier carrying computer program code for performing the embodiments herein when being loaded into the alertness-increasing system 1. One such carrier may be in the form of a CD ROM disc. It is however feasible with other data carriers such as a memory stick. The computer program code may furthermore be provided as pure program code on a server and downloaded to the alertness-increasing system 1.

The alertness-increasing system 1 may further comprise a **memory 14** comprising one or more memory units. The memory 14 may be arranged to be used to store e.g. information, and further to store data, configurations, schedulings, and applications, and for instance parameters reflecting level of alertness and/or in-alertness of the driver, in-alertness thresholds, and/or the software-based function, to perform the methods herein when being executed in the alertness-increasing system 1. Furthermore, the determining unit 11, the initiating unit 12, the optional processor 13, and/or the optional memory 14 may, at least partly, be implemented in one or several arbitrary **nodes 15** of the vehicle 2. A node 15 may e.g. be an electronic control unit (ECU), such as an infotainment node and/or a main central node, or any suitable generic electronic device comprised in the vehicle 2.

Additionally or alternatively, the determining unit 11, the initiating unit 12, the optional processor 13, and/or the optional memory 14 may, at least partly, be implemented in the user device 3. The disposition of the functionality between the user device 3 and node(s) 15 may be arbitrary selected as considered suitable. According to an alternative example, the node 15 may, rather than being represented by one or several integrated ECUs, be represented by a plug-in solution, for instance a dongle. In that manner, an aftermarket solution may be provided to any arbitrary vehicle suitable.

Those skilled in the art will also appreciate that the determining unit 11 and the initiating unit 12 described above, and which will be described in more detail later on in this description, may refer to a combination of analog and digital circuits, and/or one or more processors configured with software and/or firmware, e.g. stored in a memory such as the memory 14, that when executed by the one or more processors such as the processor 13 perform as will be described in more detail later on. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

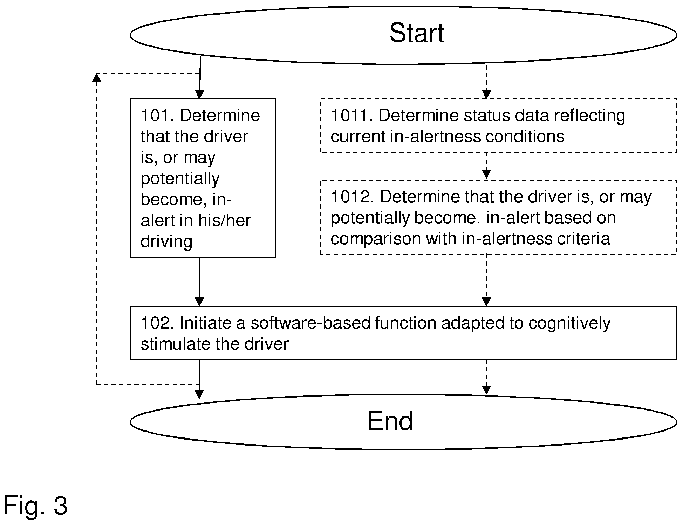

**Figure 3** is a flowchart depicting an exemplifying method performed by an alertness-increasing system 1 according to embodiments of the disclosure. The method in the alertness-increasing system 1 is for avoiding a situation with a potentially in-alert driver of the vehicle 2. The exemplifying method, which may be continuously repeated, comprises the following actions discussed with support from Figures 1 and 2.

### Action 101

In Action 101, the alertness-increasing system 1 determines, e.g. by means of the determining unit 11, that the driver is, and/or may potentially become, in-alert in his or her driving.

Correspondingly, the determining unit 11 is adapted for determining that the driver is, and/or may potentially become, in-alert in his or her driving.

Thereby, it is established that the driver is e.g. bored, drowsy, dosing, fatigued, sleepy, and/or asleep, or that the driver is likely to so become. Determining that the driver is, and/or may potentially become, in-alert, may be based on a level of measured in-alertness of the driver being higher than a predetermined set value. Furthermore, determination of that the driver is in-alert may be based on conventional approaches of calculating a level of drowsiness or in-alertness. That is, it may for instance be determined that the driver is in-alert, by monitoring bodily signs from the driver, as commonly known in the art. Moreover, determination of that the driver may potentially become in-alert, may be based on the awareness of a monotonous road section lying ahead or being assumed to lie ahead of the vehicle 2, in which case it may be likely that the driver becomes e.g. drowsy. That is, it may for instance be determined that the driver may potentially become in-alert, by monitoring the scene ahead of the vehicle 2, e.g. by means of a camera mounted on the vehicle 2, as commonly known in the art.

Optionally, the Action 101 of determining that the driver is, and/or may potentially become, in-alert in his or her driving, comprises the sub-actions 1011 and 1012 to be described in the following.

In optional **Action 1011,** the alertness-increasing system 1 may determine, e.g. by means of the determining unit 11, status data, which status data comprises one or more status data parameters reflecting current in-alertness conditions.

Subsequently, in optional **Action 1012,** the alertness-increasing system 1 may determine, e.g. by means of the determining unit 11, that the status data insinuates that the driver is, and/or may potentially become, in-alert in his or her driving, based on comparing at least a first status data parameter of the status data, with predetermined in-alertness criteria.

Correspondingly, the determining unit 11 may be adapted for determining status data, which status data comprises one or more status data parameters reflecting current in-alertness conditions. Moreover, the determining unit 11 may be adapted for determining that the status data insinuates that the driver is, and/or may potentially become, in-alert in his or her driving, based on comparing at least a first status data parameter of the status data, with predetermined in-alertness criteria.

Thereby, by comparing at least a first status data parameter of the status data, e.g. a parameter reflecting a current driver grip force on the steering wheel, with predetermined in-alertness criteria, e.g. a steering wheel grip force threshold preference, the alertness-increasing system 1 may determine that if the current driver grip force is below the steering wheel grip force threshold, the driver is considered currently in-alert in his or her driving.

The expression "status data parameters reflecting current in-alertness conditions" may refer to status data elements revealing prevailing status values of parameters associated with alertness and/or in-alertness of the driver. Furthermore, the one or more status data parameters may already be known by concurrent systems of the vehicle 2, and may thus be available to the alertness-increasing system 1. Furthermore, the expression "predetermined in-alertness criteria", which criteria may be pre-set and/or adjustable, may refer to maximum parameters levels of in-alertness considered suitable.

### Action 102

In Action 102, the alertness-increasing system 1 initiates, e.g. by means of the initiating unit 12, the software-based function 4 adapted to cognitively stimulate the driver.

Correspondingly, the initiating unit 12 is adapted for initiating the software-based function 4 adapted to cognitively stimulate the driver.

Thereby, a mind-stimulating activity is triggered to increase, or preventively maintain, the alertness of the driver. The exemplifying software-based function 4 may refer to a software-based function which is mind-stimulating for the driver, and/or a software-based function engaging the driver in intellectual thinking or interaction. Furthermore, said function 4 may refer to a function which is mind-stimulating on a level at which the alertness of the driver is increased, or preventively maintained, rather than a function distracting the driver from his or her main task of driving the vehicle.

Moreover, the software-based function 4 may refer to a function, functionality and/or an application embedded in the node(s) 15, and/or embedded in the user device 3. According to an example, the software-based function 4 is comprised in the alertness-increasing system 1.

Furthermore, the software-based function 4 may provide audible cognitive stimulation e.g. via one or more of the loudspeaker 213, and/or visual cognitive stimulation e.g. via one or more of the display 211. Moreover, the software-based function 4 may invite or prompt the driver to interact therewith, for instance via one or more of the touch display 211, the microphone, and/or steering wheel control buttons 212.

Optionally, and as discussed above, the software-based function 4 may be associated with the in-vehicle system 21 of the vehicle 2; additionally or alternatively, the software-based function 4 may optionally be associated with the user device 3 adapted to communicate with the vehicle 2.

Furthermore, and as discussed above, the software-based function 4 may optionally be a function considered to be driver-distracting and prohibited from use during absence of said Action 101 of the alertness-increasing system 1 determining that the driver is, and/or may potentially become, in-alert in his or her driving. Thereby, upon Action 101 if determining that the driver is, and/or may potentially become, in-alert, a function deemed to be too driver-distracting during ordinary conditions, i.e. when it has not been determined that the driver is, and/or may potentially become, in-alert, may go from being blocked from driver use to be made available in order to avoid a situation with a potentially in-alert driver.

Said driver-distracting function may for instance refer to in-vehicle functionality which is blocked from use when it has not been determined that the driver is, and/or may potentially become, in-alert; for instance, certain infotainment, entertainment and/or navigation features. For instance, the driver-distracting function may relate to texting, placing a phone call, scrolling through menus, entering input into the navigation system etc., all of which during "ordinary" conditions may be unavailable functionality to the driver, for instance when driving the vehicle at more than e.g. 10 km/h.

Moreover, and as discussed above, the software-based function 4 may comprise the alertness task application 41, such as an alertness game application. Thereby, said function 4 is cognitively stimulating to the driver in that the alertness task application 41 invites the driver to participate in an alertness task. The alertness task application 41 may relate to any task or game cognitively stimulating the driver, such as, for instance, a task or game inviting the driver to do mental arithmetic, do riddles, sing, take a quiz, or count the number of oncoming vehicles having licence plates containing a specific letter or number, or a task or game questioning the driver on previously passed surroundings, etc. The alertness task application 41, e.g. an alertness game application, may for instance be represented by a user application program integrated into an operating system of the alertness-increasing system 1, in-vehicle system 21, and/or user device 3, and/or stored in one or more of a memory 14 of either thereof and executable by one or more of a respective processor 13.

Optionally, the Action 101 of determining that the driver is, and/or may potentially become, in-alert in his or her driving, is based on a reached score in the alertness task application 41 falling below a predetermined minimum score threshold.

Correspondingly, the determining unit 11 may optionally be adapted for determining that the driver is, and/or may potentially become, in-alert in his or her driving, based on a reached score in the alertness task application 41 falling below a predetermined minimum score threshold.

Thereby, in-alertness, or potential in-alertness, may be established by taking into account how the driver performs in said alertness task application 41. That is, a reached score, or alternatively a plurality of reached scores, dropping below one or more score thresholds, may indicate that the driver is e.g. drowsy. Furthermore, declining scores of a number of driver participations in the alertness task application 41, may indicate that the driver's alertness is decreasing. Accordingly, keeping track of the driver's performance when participating in the alertness task application 41 may assist in establishing that the driver is, and/or may potentially become, in-alert.

A measure of falling below the predetermined minimum score threshold, may be to initiate another and/or a complimentary software-based function adapted to cognitively stimulate the driver, for instance a function that is more challenging, and/or a function different from the original one.

Consequently, according to the approach described in the foregoing, a mind-stimulating activity 4 is, upon determining that the driver is and/or is about to become in-alert, triggered to increase, or preventively maintain, the alertness of the driver. That is, by initiating the software-based function 4 adapted to cognitively stimulate the driver, the driver may be roused from his or her in-alertness, and/or may preventively maintain his or her alertness, in a manner which may not even be perceived by the driver as an activity triggered to avoid a situation of him or her potentially being in-alert. Thereby, by initiating said function 4 rather than merely triggering a warning, which may be ignored or be perceived as intrusive by the driver, the driver is invited to participate in a mind-stimulating activity 4, which is likely to be a welcomed stimulus. Accordingly, triggering the mind-stimulating activity 4 represents a sophisticated solution to avoiding a situation of the driver potentially being in-alert, as compared to merely alerting the driver by means of e.g. a warning

The person skilled in the art realizes that the present disclosure by no means is limited to the preferred embodiments described above. On the contrary, many modifications and variations are possible within the scope of the appended claims. It should furthermore be noted that the drawings not necessarily drawn to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by an alertness-increasing system (1) for avoiding a situation with a potentially in-alert driver of a vehicle (2), said method comprising:
*determining* (101) that said driver is, and/or may potentially become, in-alert in his or her driving;
*initiating* (102) a software-based function (4) adapted to cognitively stimulate said driver, wherein said function (4) comprises an alertness task application (41), such as an alertness game application; and
*initiating* another and/or complimentary software-based function (4) adapted to cognitively stimulate the driver, if a reached score in said alertness task application (41) falls below a predetermined minimum score threshold.

2. The method according to claim 1, wherein said function (4) is associated with an in-vehicle system (21) of said vehicle (2), and/or is associated with a user device (3) adapted to communicate with said vehicle (2).

3. The method according to claim 1 or 2, wherein said function (4) is considered to be driver-distracting and is prohibited from use during absence of said determination (101) that the driver is, and/or may potentially become, in-alert in his or her driving.

4. The method according to claim 3, wherein said *determining* (101) that the driver is, and/or may potentially become, in-alert in his or her driving, is based on a reached score in said alertness task application (41) falling below a predetermined minimum score threshold.

5. The method according to any one of claims 1-4, wherein said *determining* (101) that the driver is, and/or may potentially become, in-alert in his or her driving, comprises:
*determining* (1011) status data, said status data comprising one or more status data parameters reflecting current in-alertness conditions; and
*determining* (1012) that said status data insinuates that said driver is, and/or may potentially become, in-alert in his or her driving, based on comparing at least a first status data parameter of said status data, with predetermined in-alertness criteria.

6. An **alertness-increasing system** (1) adapted for avoiding a situation with a potentially in-alert driver of a vehicle (2), said alertness-increasing system (1) comprising:
a **determining unit** (11) adapted for *determining* (101) that said driver is, and/or may potentially become, in-alert in his or her driving; and
an **initiating unit** (12) adapted for *initiating* (102) a software-based function (4) adapted to cognitively stimulate said driver, wherein said function (4) comprises an alertness-task application (41), such as an alertness game application,
said determining unit (11) and said initiating unit (12) further being adapted for initiating another and/or complimentary software-based function (4) adapted to cognitively stimulate the driver, if a reached score in said alertness task application (41) falls below a predetermined minimum score threshold.

7. The alertness-increasing system (1) according to claim 6, wherein said function (4) is associated with an in-vehicle system (21) of said vehicle (2), and/or is associated with a user device (3) adapted to communicate with said vehicle (2).

8. The alertness-increasing system (1) according to claim 6 or 7, wherein said function (4) is considered to be driver-distracting and is prohibited from use during absence of said determination (101) that the driver is, and/or may potentially become, in-alert in his or her driving.

9. The alertness-increasing system (1) according to claim 8, wherein said determining unit (11) is adapted for *determining* (102) that the driver is, and/or may potentially become, in-alert in his or her driving, based on a reached score in said alertness task application (41) falling below a predetermined minimum score threshold.

10. The alertness-increasing system (1) according to any one of claims 6-9, wherein said determining unit (11) is adapted for:
*determining* (1011) status data, said status data comprising one or more status data parameters reflecting current in-alertness conditions; and
*determining* (1012) that said status data insinuates that said driver is, and/or may potentially become, in-alert in his or her driving, based on comparing at least a first status data parameter of said status data, with predetermined in-alertness criteria.

11. A **vehicle** (2) comprising an alertness-increasing system (1) according to any one of claims 6-10.

12. **A user device** (3) adapted to communicate with a vehicle (2) according to claim 11 said user device (3) comprising said alertness-increasing system (1).

## Patentansprüche

1. Verfahren, dass durch ein Aufmerksamkeits-Erhöhungssystem (1) zum Vermeiden einer Situation mit einem/einer möglicherweise unaufmerksamen Fahrer/Fahrerin eines Fahrzeugs (2) durchgeführt wird, wobei das Verfahren Folgendes umfasst:
Bestimmen (101), dass der Fahrer/die Fahrerin bei seinem/ihrem Fahren unaufmerksam ist und/oder möglicherweise unaufmerksam werden kann;
Auslösen (102) einer softwarebasierten Funktion (4), die ausgelegt ist, den Fahrer/die Fahrerin kognitiv anzuregen, wobei die Funktion (4) eine Aufmerksamkeitsaufgabenanwendung (41) wie etwa eine Aufmerksamkeitsspielanwendung umfasst; und
Auslösen einer weiteren und/oder ergänzenden, softwarebasierten Funktion (4), die ausgelegt ist, den Fahrer/die Fahrerin kognitiv anzuregen, wenn eine erreichte Punktzahl in der Aufmerksamkeitsaufgabenanwendung (41) unter einen vorgegebenen minimalen Punktzahlschwellenwert abfällt.

2. Verfahren nach Anspruch 1, wobei die Funktion (4) einem fahrzeuginternen System (21) des Fahrzeugs (2) zugeordnet ist und/oder einer Anwendervorrichtung (3), die ausgelegt ist, mit dem Fahrzeug (2) zu kommunizieren, zugeordnet ist.

3. Verfahren nach Anspruch 1 oder 2, wobei die Funktion (4) als fahrerablenkend betrachtet wird und während des Nichtvorhandenseins der Bestimmung (101), dass der Fahrer/die Fahrerin bei seinem/ihrem Fahren unaufmerksam ist und/oder möglicherweise unaufmerksam werden kann, verboten ist.

4. Verfahren nach Anspruch 3, wobei das Bestimmen (101), dass der Fahrer/die Fahrerin bei seinem/ihrem Fahren unaufmerksam ist und/oder möglicherweise unaufmerksam werden kann, darauf basiert, dass eine erreichte Punktzahl in der Aufmerksamkeitsaufgabenanwendung (41) unter einen vorgegebenen, minimalen Punktzahlschwellenwert abfällt.

5. Verfahren nach einem der Ansprüche 1-4, wobei das Bestimmen (101), dass der Fahrer/die Fahrerin bei seinem/ihrem Fahren unaufmerksam ist und/oder möglicherweise unaufmerksam werden kann, Folgendes umfasst:
Bestimmen (1011) von Zustandsdaten, wobei die Zustandsdaten einen oder mehrere Zustandsdatenparameter, die Bedingungen für eine momentane Unaufmerksamkeit wiedergeben, umfassen; und
Bestimmen (1012), dass die Zustandsdaten andeuten, dass der Fahrer/die Fahrerin bei seinem/ihrem Fahren unaufmerksam ist und/oder möglicherweise unaufmerksam werden kann, auf der Grundlage des Vergleichens mindestens eines ersten Zustandsdatenparameters der Zustandsdaten mit vorgegebenen Unaufmerksamkeitskriterien.

6. Aufmerksamkeits-Erhöhungssystem (1), das zum Vermeiden einer Situation mit einem/einer möglicherweise unaufmerksamen Fahrer/Fahrerin eines Fahrzeugs (2) ausgelegt ist, wobei das Aufmerksamkeits-Erhöhungssystem (1) Folgendes umfasst:
eine Bestimmungseinheit (11), die zum Bestimmen (101), dass der Fahrer/die Fahrerin bei seinem/ihrem Fahren unaufmerksam ist und/oder möglicherweise unaufmerksam werden kann, ausgelegt ist; und
eine Auslöseeinheit (12), die zum Auslösen (102) einer softwarebasierten Funktion (4), die ausgelegt ist, den Fahrer/die Fahrerin kognitiv anzuregen, wobei die Funktion (4) eine Aufmerksamkeitsaufgabenanwendung (41) wie etwa eine Aufmerksamkeitsspielanwendung umfasst, ausgelegt ist;
wobei die Bestimmungseinheit (11) und die Auslöseeinheit (12) ferner zum Auslösen einer weiteren und/oder ergänzenden, softwarebasierten Funktion (4), die ausgelegt ist, den Fahrer/die Fahrerin kognitiv anzuregen, wenn eine erreichte Punktzahl in der Aufmerksamkeitsaufgabenanwendung (41) unter einen vorgegebenen, minimalen Punktzahlschwellenwert abfällt, ausgelegt sind.

7. Aufmerksamkeits-Erhöhungssystem (1) nach Anspruch 6, wobei die Funktion (4) einem fahrzeuginternen System (21) des Fahrzeugs (2) zugeordnet ist und/oder einer Anwendervorrichtung (3), die ausgelegt ist, mit dem Fahrzeug (2) zu kommunizieren, zugeordnet ist.

8. Aufmerksamkeits-Erhöhungssystem (1) nach Anspruch 6 oder 7, wobei die Funktion (4) als fahrerablenkend betrachtet wird und während des Nichtvorhandenseins der Bestimmung (101), dass der Fahrer/die Fahrerin bei seinem/ihrem Fahren unaufmerksam ist und/oder möglicherweise unaufmerksam werden kann, verboten ist.

9. Aufmerksamkeits-Erhöhungssystem (1) nach Anspruch 8, wobei die Bestimmungseinheit (11) zum Bestimmen (102), dass der Fahrer/die Fahrerin bei seinem/ihrem Fahren unaufmerksam ist und/oder möglicherweise unaufmerksam werden kann, auf der Grundlage, dass eine erreichte Punktzahl in der Aufmerksamkeitsaufgabenanwendung (41) unter einen vorgegebenen, minimalen Punktzahlschwellenwert abfällt, ausgelegt ist.

10. Aufmerksamkeits-Erhöhungssystem (1) nach einem der Ansprüche 6-9, wobei die Bestimmungseinheit (11) ausgelegt ist zum:
Bestimmen (1011) von Zustandsdaten, wobei die Zustandsdaten einen oder mehrere Zustandsdatenparameter, die Bedingungen für eine momentane Unaufmerksamkeit wiedergeben, umfassen; und
Bestimmen (1012), dass die Zustandsdaten andeuten, dass der Fahrer/die Fahrerin bei seinem/ihrem Fahren unaufmerksam ist und/oder möglicherweise unaufmerksam werden kann, auf der Grundlage des Vergleichens mindestens eines ersten Zustandsdatenparameters der Zustandsdaten mit vorgegebenen Unaufmerksamkeitskriterien.

11. Fahrzeug (2) das ein Aufmerksamkeits-Erhöhungssystem (1) nach einem der Ansprüche 6-10 umfasst.

12. Anwendervorrichtung (3), die ausgelegt ist, mit einem Fahrzeug (2) nach Anspruch 11 zu kommunizieren, wobei die Anwendervorrichtung (3) das Aufmerksamkeits-Erhöhungssystem (1) umfasst.

## Revendications

1. Procédé réalisé par un système d'augmentation de la vigilance (1) pour éviter une situation avec un conducteur en manque de vigilance d'un véhicule (2), ledit procédé consistant à :
déterminer (101) que ledit conducteur est en manque de vigilance et/ou peut potentiellement commencer à manquer de vigilance pendant sa conduite ;
amorcer (102) une fonction logicielle (4) conçue pour stimuler de manière cognitive ledit conducteur, ladite fonction (4) comprenant une application de tâches de vigilance (41), comme une application de jeu de vigilance ; et
amorcer une fonction logicielle distincte et/ou complémentaire (4) conçue pour stimuler de manière cognitive le conducteur, si un score atteint dans ladite application de tâches de vigilance (41) tombe au-dessous d'un score-seuil minimum prédéterminé.

2. Procédé selon la revendication 1, dans lequel ladite fonction (4) est associée à un système embarqué (21) dudit véhicule (2), et/ou est associée à un dispositif d'utilisateur (3) conçu pour communiquer avec ledit véhicule (2).

3. Procédé selon la revendication 1 ou 2, dans lequel ladite fonction (4) est considérée comme étant distrayante pour le conducteur et ne peut pas être utilisée en l'absence de ladite détermination (101) que le conducteur est en manque de vigilance et/ou peut potentiellement commencer à manquer de vigilance pendant sa conduite.

4. Procédé selon la revendication 3, dans lequel ladite détermination (101) que le conducteur est en manque de vigilance et/ou peut potentiellement commencer à manquer de vigilance pendant sa conduite est basée sur un score atteint dans ladite application de tâches de vigilance (41) qui tombe au-dessous d'un score-seuil minimum prédéterminé.

5. Procédé selon l'une quelconque des revendications 1 à 4, dans lequel ladite détermination (101) que le conducteur est en manque de vigilance et/ou peut potentiellement commencer à manquer de vigilance pendant sa conduite consiste à :
déterminer (1011) des données de statut, lesdites données de statut comprenant un ou plusieurs paramètres de données de statut reflétant des conditions actuelles de manque de vigilance ; et
déterminer (1012) que lesdites données de statut insinuent que ledit conducteur est en manque de vigilance et/ou peut potentiellement commencer à manquer de vigilance pendant sa conduite sur la base d'une comparaison d'au moins un premier paramètre de données de statut desdites données de statut à des critères prédéterminés de manque de vigilance.

6. Système d'augmentation de la vigilance (1) conçu pour éviter une situation avec un conducteur en manque de vigilance d'un véhicule (2), ledit système d'augmentation de la vigilance (1) comprenant :
une unité de détermination (11), conçue pour déterminer (101) que ledit conducteur est en manque de vigilance et/ou peut potentiellement commencer à manquer de vigilance pendant sa conduite ; et
une unité d'amorçage (12), conçue pour amorcer (102) une fonction logicielle (4) conçue pour stimuler de manière cognitive ledit conducteur, ladite fonction (4) comprenant une application de tâches de vigilance (41), comme une application de jeu de vigilance,
ladite unité de détermination (11) et ladite unité d'amorçage (12) étant en outre conçues pour amorcer une fonction logicielle distincte et/ou complémentaire (4) conçue pour stimuler de manière cognitive le conducteur, si un score atteint dans ladite application de tâches de vigilance (41) tombe au-dessous d'un score-seuil minimum prédéterminé.

7. Système d'augmentation de la vigilance (1) selon la revendication 6, dans lequel ladite fonction (4) est associée à un système embarqué (21) dudit véhicule (2), et/ou est associée à un dispositif d'utilisateur (3) conçu pour communiquer avec ledit véhicule (2).

8. Système d'augmentation de la vigilance (1) selon la revendication 6 ou 7, dans lequel ladite fonction (4) est considérée comme étant distrayante pour le conducteur et ne peut pas être utilisée en l'absence de ladite détermination (101) que le conducteur est en manque de vigilance et/ou peut potentiellement commencer à manquer de vigilance pendant sa conduite.

9. Système d'augmentation de la vigilance (1) selon la revendication 8, dans lequel ladite unité de détermination (11) est conçue pour déterminer (102) que le conducteur est en manque de vigilance et/ou peut potentiellement commencer à manquer de vigilance pendant sa conduite, sur la base d'un score atteint dans ladite application de tâches de vigilance (41) qui tombe au-dessous d'un score-seuil minimum prédéterminé.

10. Système d'augmentation de la vigilance (1) selon l'une quelconque des revendications 6 à 9, dans lequel ladite unité de détermination (11) est conçue pour :
déterminer (1011) des données de statut, lesdites données de statut comprenant un ou plusieurs paramètres de données de statut reflétant des conditions actuelles de manque de vigilance ; et
déterminer (1012) que lesdites données de statut insinuent que ledit conducteur est en manque de vigilance et/ou peut potentiellement commencer à manquer de vigilance pendant sa conduite sur la base d'une comparaison d'au moins un premier paramètre de données de statut desdites données de statut à des critères prédéterminés de manque de vigilance.

11. Véhicule (2) comprenant un système d'augmentation de la vigilance (1) selon l'une quelconque des revendications 6 à 10.

12. Dispositif d'utilisateur (3) conçu pour communiquer avec un véhicule (2) selon la revendication 11, ledit dispositif d'utilisateur (3) comprenant ledit système d'augmentation de la vigilance (1).
